(19) Europäisches Patentamt / European Patent Office / Office européen des brevets

(11) **EP 4 629 118 A1**

(12) **EUROPEAN PATENT APPLICATION**

(43) Date of publication:
**08.10.2025 Bulletin 2025/41**

(21) Application number: **25193682.9**

(22) Date of filing: **04.08.2025**

(51) International Patent Classification (IPC):
**G06F 21/60** (2013.01)   **G06F 12/14** (2006.01)
**G06F 21/78** (2013.01)   **H04L 9/06** (2006.01)

(52) Cooperative Patent Classification (CPC):
**G06F 21/602; G06F 12/14; G06F 12/1408;**
**G06F 21/60; G06F 21/78; H04L 9/0631;**
G06F 21/79; G06F 2212/1052; G06F 2212/40;
H04L 9/0625; H04L 9/0861

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.03.2025 CN 202510360719**

(71) Applicant: **XG TECH PTE. LTD.**
**Singapore 179098 (SG)**

(72) Inventors:
• LIU, Tao
  **Singapore, 179098 (CN)**
• SHEN, Xinwei
  **Singapore, 179098 (CN)**

(74) Representative: **Patentanwälte Magenbauer &**
**Kollegen**
**Partnerschaft mbB**
**Plochinger Straße 109**
**73730 Esslingen (DE)**

(54) **METHOD AND APPARATUS FOR PROCESSING DATA, MEDIUM, AND DEVICE**

(57)    Disclosed are a method and apparatus for processing data, a medium, and a device. The method includes: determining target data to be stored at a target memory address of a target memory and a target key corresponding to the target memory address; determining a target transposition algorithm corresponding to the target data; encrypting the target data based on the target key and the target transposition algorithm, to obtain encrypted data; and storing the encrypted data at the target memory address of the target memory. With the solution, the target data to be stored are enabled to be encrypted first based on the target key and the target transposition algorithm, which therefore enables to change the target data from plaintext to ciphertext, which therefore enables to store the ciphertext at the target memory address of the target memory. Thereby, when the target memory is subjected to attack, it is not easy for originally stored data to be obtained directly, which thus enables to avoid information leakage, which then guarantees data security.

**EP 4 629 118 A1**

## Description

### TECHNICAL FIELD

This disclosure relates to field of secure data storage, and more particularly, to a method and apparatus for processing data, a medium, and a device.

### BACKGROUND

In field of chip hardware information security, secure storage is particularly important. In order to protect stored data, the stored data may be protected by being encrypted, or access to the stored data may be protected.

At present, since data stored in a non-volatile memory in a chip are entirely in plaintext, when the non-volatile memory is subjected to a physical attack, an attacker may obtain content stored in the non-volatile memory, leading to information leakage.

Thus, how to encrypt data stored in a non-volatile memory has become a problem pressing for a solution.

### SUMMARY

To solve the above technical problems, this disclosure provides a method and apparatus for processing data, a medium, and a device, for solving the problem of information leakage in a non-volatile memory.

A first aspect provides a method for processing data, including: determining target data to be stored at a target memory address of a target memory and a target key corresponding to the target memory address; determining a target transposition algorithm corresponding to the target data; encrypting the target data based on the target key and the target transposition algorithm, to obtain encrypted data; and storing the encrypted data at the target memory address of the target memory.

Another aspect provides an apparatus for processing data, including:

a first determining module configured for determining target data to be stored at a target memory address of a target memory and a target key corresponding to the target memory address, where a number of bits of the initial data is identical to a number of bits of the target key; a second determining module configured for determining a target transposition algorithm corresponding to the target data; an encryption processing module configured for encrypting the target data based on the target key and the target transposition algorithm, to obtain encrypted data; and a data storing module configured for storing the encrypted data at the target memory address of the target memory.

In still another aspect, a computer program product is proposed in an embodiment. When instructions in the computer program product are executed by a processor, a method for processing data according to the first aspect of this disclosure is implemented.

In yet another aspect, an electronic device is proposed, where the electronic device includes: a processor; and a memory, configured for storing processor-executable instructions, where the processor is configured for reading the executable instructions from the memory, and executing the instructions to implement a method for processing data according to the first aspect as described above.

With a method for processing data according to embodiments of this disclosure, after target data to be stored at a target memory address of a target memory and a target key corresponding to the target memory address have been determined, a target transposition algorithm corresponding to the target data is determined, which therefore enables to encrypt the target data based on the target key and the target transposition algorithm to obtain encrypted data, and then store the encrypted data at the target memory address of the target memory. That is, with embodiments of this disclosure, the target data to be stored are enabled to be encrypted first based on the target key and the target transposition algorithm, which therefore enables to change the target data from plaintext to ciphertext, which therefore enables to store the ciphertext at the target memory address of the target memory. Thereby, when the target memory is subjected to attack, it is not easy for originally stored data to be obtained directly, which thus enables to avoid information leakage, which then guarantees data security.

In addition, with a solution according to this disclosure, the target data to be stored are encrypted based on the target key and the target transposition algorithm, which therefore matches a feature of bit-wise programming of the non-volatile memory, and will not impact bit-wise data programming of the non-volatile memory, thereby supporting programming at minimum data granularity while guaranteeing data security.

### BRIEF DESCRIPTION OF DRAWINGS

FIG. 1 is a diagram of a structure of a ciphertext storage algorithm for non-volatile storage according to an illustrative embodiment of this disclosure.

FIG. 2 is a flowchart of a method for processing data according to an illustrative embodiment of this disclosure.

FIG. 3 is a flowchart of a method for processing data according to another illustrative embodiment of this disclosure.

FIG. 4 is a flowchart of a method for processing data according to yet another illustrative embodiment of this disclosure.

FIG. 5 is a flowchart of a method for processing data according to still another illustrative embodiment of this disclosure.

FIG. 6 is a diagram of row transformation processing according to an illustrative embodiment of this disclosure.

FIG. 7 is a flowchart of a method for processing data according to an illustrative embodiment of this disclosure.

FIG. 8 is a flowchart of a method for processing data according to an illustrative embodiment of this disclosure.

FIG. 9 is a diagram of a structure of an apparatus for processing data according to an illustrative embodiment of this disclosure.

FIG. 10 is a diagram of a structure of an electronic device according to an illustrative embodiment of this disclosure.

## DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

Disclosure overview

In field of chip hardware information security, in order to protect data privacy, generally, stored data are to be protected by being encrypted, to prevent data leakage.

Data stored in a non-volatile memory in a chip are entirely in form of plaintext, and therefore are extremely vulnerable to a physical attack. Taking a one-time programmable memory (electronic fuse, EFUSE) as an example, when the EFUSE internal to the chip is subjected to an attack of a mode such as chemical staining combined with microscopy, layout of the EFUSE may be directly observed, and then content stored may be obtained.

At present, in a mode of software operation in prior art, an electrical signal is written in units of bytes/words, that is, data are encrypted and decrypted in units of bytes/words. However, physical programming of a non-volatile memory is generally at bit level granularity, which does not match data granularity of encrypting and decrypting data in units of bytes/words, which thereby may impact bit-wise programming of the non-volatile memory. Thus, there is a pressing need for a data encryption method for encrypting data stored in a non-volatile memory.

In view of the problems as described above, with a method for processing data according to embodiments of this disclosure, after target data to be stored at a target memory address of a target memory and a target key corresponding to the target memory address have been determined, a target transposition algorithm corresponding to the target data is determined, which therefore enables to encrypt the target data based on the target key and the target transposition algorithm to obtain encrypted data, and then store the encrypted data at the target memory address of the target memory. The target data to be stored are enabled to be encrypted first based on the target key and the target transposition algorithm, which therefore enables to change the target data from plaintext to ciphertext, which therefore enables to store the ciphertext at the target memory address of the target memory. Thereby, when the target memory is subjected to attack, it is not easy for originally stored data to be obtained directly, which thus enables to avoid information leakage, which then guarantees data security.

In addition, with a solution according to this disclosure, the target data to be stored are encrypted first based on the target key and the target transposition algorithm, which therefore matches a feature of bit-wise programming of the non-volatile memory, and will not impact bit-wise data programming of the non-volatile memory, thereby supporting programming at minimum data granularity while guaranteeing data security.

Illustrative system

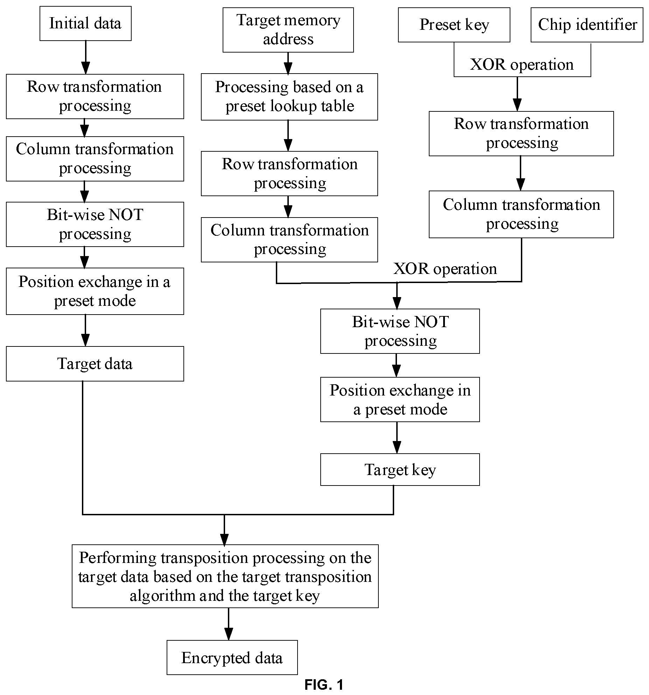

FIG. 1 is a diagram of a structure of a ciphertext storage algorithm for non-volatile storage according to an illustrative embodiment of this disclosure.

As shown in FIG. 1, the ciphertext storage algorithm according to embodiments of this disclosure may include two paths, which are a data path and a key path, respectively. After target data have been obtained through the data path and a target key has been obtained through the key path, transposition processing may be performed on the target key based on the target key and a target transposition algorithm, to obtain encrypted data, to convert the data to be stored from plaintext to ciphertext. As shown in FIG. 1, the ciphertext storage algorithm may specifically include an implementation process as follows.

(1) Data path

Illustratively, as shown in FIG. 1, after initial data to be stored in a target memory have been obtained, a series of processing may be performed on the initial data based on a plurality of modes of processing, to obtain the target data, where the plurality of modes of processing include: row transformation processing, column transformation processing, bitwise NOT processing, and position exchange in a preset mode.

Thus, positions of elements in the initial data are shuffled through the data path, such that a data structure of the initial data is changed, and therefore the updated data structure is the target data; after the target data have been changed from plaintext to ciphertext by encryption processing, and the ciphertext has been stored at the target memory address of the target memory, when the target memory is subjected to attack, it is not easy for originally stored data to be obtained directly, which thereby ensures data security.

(2) Key path

Illustratively, as shown in FIG. 1, after determining that initial data are to be stored at the target memory address of the target memory, a series of processing may be performed on the target memory address based on a plurality of modes of processing, to obtain a first encrypted memory address, where the plurality of modes of processing include: processing based on a preset lookup table, row transformation processing, and column transformation processing.

After a preset key and a chip identifier corresponding to the target memory have been determined, an XOR operation may be performed on the preset key and the chip identifier, and a series of processing may be performed on an operation result based on a plurality of modes of processing, to obtain an encrypted chip identifier, where the plurality of modes of processing include: row transformation processing and column transformation processing.

After obtaining the first encrypted memory address and a first encrypted key, an XOR operation may first be performed on the first encrypted memory address and the encrypted chip identifier, and a series of processing may be performed on an operation result based on a plurality of modes of processing, to obtain the target key, where the plurality of modes of processing include: bit-wise NOT processing and position exchange in a preset mode.

Thus, with the key path, on one hand, the target key for encrypting the data is made more complex, which therefore reduces a risk of key leakage, and thereby improves data security; on the other hand, the memory address is introduced in the target key, which therefore guarantees that respective memory addresses correspond to different keys, and thereby, cracking a key corresponding to one memory address has no impact on security of data at other memory addresses, which then implements security isolation among data at different memory addresses.

(3) Transposition process

Illustratively, as shown in FIG. 1, after the target data have been obtained through the data path and the target key has been obtained through the key path, a target transposition algorithm corresponding to the target data may be determined first, and transposition processing may be performed on the target key based on the target key and the target transposition algorithm, to obtain the encrypted data.

After that, the encrypted data may be stored at the target memory address of the target memory.

Thus, after transposition processing has been performed on the target key based on the target key and the target transposition algorithm, the data to be stored are enabled to be converted from plaintext to ciphertext before being stored, thus implementing ciphertext storage in a non-volatile memory.

For the description of the various modes of processing in the above-described embodiments, one may refer to elaboration in a method embodiment below, which is not elaborated here in embodiments of this disclosure.

With a method for processing data according to embodiments of this disclosure, it is enabled to perform a series of processing on the elements of the initial data, which therefore shuffles the positions of the elements in the initial data, such that data complexity is increased in mode of changing the data structure of the initial data, thereby making the obtained target data more difficult to parse and crack; it is enabled to obtain the target key by performing a series of processing on the preset key and the chip identifier and then combining the processing result with the memory address, which therefore makes the target key more complex, thereby reducing a risk of key leakage; after that, it is enabled to perform transposition processing on the target data based on the determined target transposition algorithm and the target key, to obtain the encrypted data, such that the obtained ciphertext is more complex. Thereby, when the target memory is subjected to attack, because of the high complexity of the target key, it is not easy to crack the ciphertext, which thereby guarantees data security. In addition, it is not possible to directly obtain the originally stored data even if the ciphertext is cracked, which thus enables to avoid information leakage, which then guarantees data security.

Illustrative method

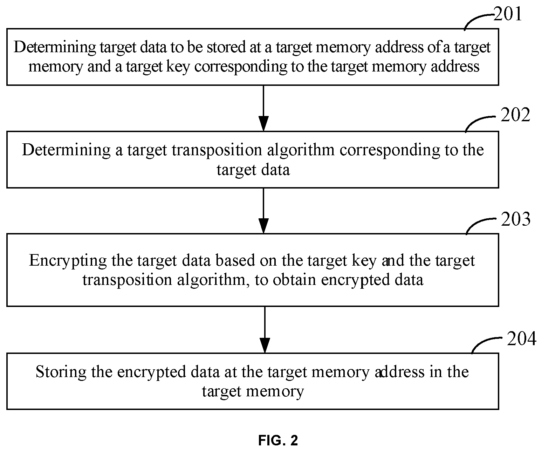

FIG. 2 is a flowchart of a method for processing data according to an illustrative embodiment of this disclosure.
Illustratively, the method may be performed by an electronic device or by a processor in an electronic device. As shown in FIG. 2, the method may include steps as follows.
Step 201, Determining target data to be stored at a target memory address of a target memory and a target key corresponding to the target memory address.
In embodiments of this disclosure, the target memory is a non-volatile memory in a chip. For example, the target memory is a one-time programmable memory EFUSE in a system on chip (SoC). The target memory address, the target data, and the target key are binary data of identical numbers of bits.
In some embodiments, the target memory is constituted by a plurality of memory units, where a respective memory unit includes a corresponding memory address, where the memory address is numbering of the corresponding memory unit. The target memory address may be numbering of a target memory unit, where the target memory unit may be any one memory unit of the plurality of memory units or a specific memory unit.
In some embodiments, the target data may include data of any one type as follows: operation state data, sensor data, user set data, map data, or other possible data, etc. Target data of different types may be obtained in different modes, and therefore a data type of the target data may be determined, and a mode of obtaining may be determined based on the data type, which thereby enables to obtain the target data in the corresponding mode of obtaining.
Illustratively, in field of vehicle technology, when the target data are operation state data, operation data of a component (such as an engine) of a vehicle, fault diagnosis data, and the like may be collected by an electronic control unit of the vehicle and set as the target data.
In some embodiments, the target data may be initial data to be stored at the target memory address, or data obtained by performing at least one encryption processing on the initial data, which is not limited in embodiments of this disclosure.
In some embodiments, the target key may be a preset key, or a key obtained by performing at least one processing on the preset key, which is not limited in embodiments of this disclosure. When the target key is a preset key, the preset key may be a chip identifier of the chip; when the target key is a key obtained by performing at least one processing on the preset key, at least one processing may be performed on the chip identifier to obtain the target key.
In some examples, when the target key is the chip identifier of the chip, the target key may be obtained by accessing a specific register in the chip; or, an instruction requesting to obtain the target key may be sent to the chip, to obtain the target key.
In some embodiments, there is a correspondence between the target memory address and the target key, and therefore, different target memory addresses correspond to different target keys.
Step 202, Determining a target transposition algorithm corresponding to the target data
In some embodiments, the corresponding target transposition algorithm may be determined based on the target data, and therefore, different target data correspond to different target transposition algorithms. The target transposition algorithm may indicate a plurality of groups of to-be-exchanged positions, for exchanging elements on different to-be-exchanged positions in the target data.
Step 203, Encrypting the target data based on the target key and the target transposition algorithm, to obtain encrypted data.
In some embodiments, since the target transposition algorithm may be configured for indicating a plurality of groups of to-be-exchanged positions, the encrypting the target data based on the target key and the target transposition algorithm, to obtain encrypted data may refer to performing, based on the target key and the target transposition algorithm, transposition processing on at least one group of elements in the target data, to shuffle an original data structure of the target data, where data constituted by a thus formed new data structure are the encrypted data, and thus the target data to be stored become ciphertext.
Step 204, Storing the encrypted data at the target memory address of the target memory.
In some embodiments, after encrypting the target data to obtain the encrypted data, the encrypted data may be written at the target memory address of the target memory in a mode of software, to implement storage of the target data in ciphertext.
Illustratively, the target memory is an electrically erasable programmable read-only memory (EEPROM), for example. After encrypting the target data to obtain the encrypted data, a write parameter of a write function in the EEPROM may first be configured, and then the configured write function is called to write the encrypted data in the EEPROM at the target memory address, where the write parameter includes: the target memory address, a data length and a data pointer of the encrypted data.
With a method for processing data according to embodiments of this disclosure, after target data to be stored at a target memory address of a target memory and a target key corresponding to the target memory address have been determined, a target transposition algorithm corresponding to the target data is determined, which therefore enables to encrypt the target data based on the target key and the target transposition algorithm to obtain encrypted data, and then store the encrypted data at the target memory address of the target memory. That is, with embodiments of this disclosure, the target data to be stored are enabled to be encrypted first based on the target key and the target transposition algorithm, which therefore enables to change the target data from plaintext to ciphertext, which therefore enables to store the ciphertext at the target memory address of the target memory. Thereby, when the target memory is subjected to attack, it is not easy for originally stored data to be obtained directly, which thus enables to avoid information leakage, which then guarantees data security.

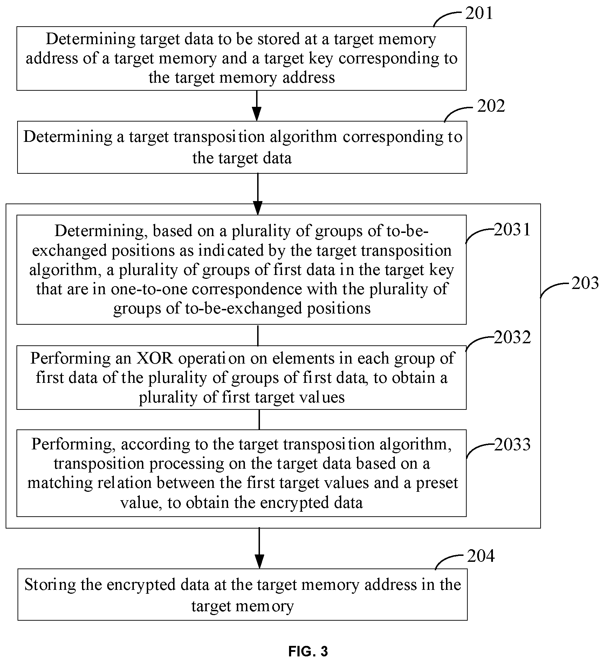

As shown in FIG. 3, based on the embodiment shown in FIG. 2, step 203 may include steps as follows.

Step 2031, Determining, based on a plurality of groups of to-be-exchanged positions as indicated by the target transposition algorithm, a plurality of groups of first data in the target key that are in one-to-one correspondence with the plurality of groups of to-be-exchanged positions

In some embodiments, since the target data and the target key are binary data of identical numbers of bits, a group of first data in the target key that corresponds to a respective group of to-be-exchanged positions of a plurality of groups of to-be-exchanged positions as indicated by the target transposition algorithm may be determined based on the plurality of groups of to-be-exchanged positions, to obtain a plurality of groups of first data. Determining the group of first data in the target key that corresponds to the respective group of to-be-exchanged positions refers to determining respective first data in the target key that correspond respectively to the plurality of positions in the respective group of to-be-exchanged positions.

Illustratively, illustration is made taking that both the target key and the target data are 32-bit binary data as an example. Assuming that the target key is denoted by key_in[31: 0], and that the target data are denoted by Data_in[31: 0], if the plurality of groups of to-be-exchanged positions as indicated by the target algorithm include: Bit0 and Bit31; Bit19 and Bit12; ...; and Bit3 and Bit25, then, a group of first data key_in[0] and key_in[31] in the target key that corresponds to Bit0 and Bit31 may be determined, a group of first data key_in[19] and key_in[12] in the target key that corresponds to Bit19 and Bit12 may be determined, and so on, until a group of first data key_in[3] and key_in[25] in the target key that corresponds to Bit3 and Bit25 is determined.

Step 2032, Performing an XOR operation on elements in each group of first data of the plurality of groups of first data, to obtain a plurality of first target values

In some embodiments, the each group of first data includes two elements, where the two elements are 0 or 1; in the performing an XOR operation on elements in each group of first data of the plurality of groups of first data, the two elements included in the each group of first data are to be compared; if the two elements are different, the result is 1; and if the two elements are identical, the result is 0. Thus, a plurality of first target values may be obtained, with each first target value being 0 or 1.

Illustratively, illustration is made taking that the target key is 32-bit binary data as an example. Assuming that the target key is denoted by key_in, and that a first target value is denoted by data_a, if a group of first data includes two elements key_in[31] and key_in[0], then data_a= key_in[31] ^key_in[0]; if key_in[31] and key_in[0] both are 1, then data_a=0; or, if key_in[31] is 0 and key_in[0] is 1, then data_a=1.

Step 2033, Performing, according to the target transposition algorithm, transposition processing on the target data based on a matching relation between the first target values and a preset value, to obtain the encrypted data

In embodiments of this disclosure, the preset value is 1.

In some embodiments, the matching relation between the first target values and the preset value includes: that a first target value matches the preset value, that is, the first target value is identical to the preset value; and that a first target value does not match the preset value, that is, the first target value is different from the preset value.

When the first target values respectively match the preset value, transposition processing is performed on elements in the target data according to the target transposition algorithm; or, when part of the first target values match the preset values, transposition processing is performed on the part of the elements in the target data according to the target transposition algorithm; or, when none of the first target values matches the preset value, no transposition processing is to be performed on the target data. Thus, that is, transposition processing is to be performed on the target data according to the target transposition algorithm just when there is a first target value matching the preset value.

Illustratively, illustration is made taking the preset value 1 as an example. Assume that the target key is denoted by key_in[31: 0], that a first target value is denoted by data_a, and that the target data are denoted by Data _in[31: 0]. A group of first data corresponding to a group of to-be-exchanged positions Bit 31 and Bit 0 is determined to include: key_in [31] and key_in[0]. Then, data_a= key_in[31] ^key_in[0]; if data_a = 1, it represents that the first target value matches the preset value, and thus transposition processing is performed on elements corresponding respectively to Bit 31 and Bit 0 in the target data; or, if data_a = 0, it represents that the first target value does not match the preset value, and thus no transposition processing is performed on the elements corresponding respectively to Bit 31 and Bit 0 in the target data.

In some embodiments, the step 2033 may specifically include: in response to the matching relation being that at least one of the first target values matches the preset value, performing, according to the target transposition algorithm, transposition processing on elements on at least one group of to-be-exchanged positions in the target data to obtain the encrypted data, where the at least one group of to-be-exchanged positions is at least one group of to-be-exchanged positions of the plurality of groups of to-be-exchanged positions that corresponds to the at least one of the first target values.

In some embodiments, the matching relation is that at least one of the first target values matches the preset value, which may include two cases of: (1) the first target values respectively matching the preset value; and (2) part of the first target values matching the preset value. In case the first target values respectively match the preset value, transposition processing may be performed on elements on a plurality of groups of to-be-exchanged positions in the target data according to the target transposition algorithm to obtain the encrypted data; and in case part of the first target values match the preset values, transposition processing may be performed on the part of the elements in the target data according to the target transposition algorithm to obtain the encrypted data.

In some examples, when at least one first target value is 0, it indicates that transposition is to be performed on elements on at least one group of to-be-exchanged positions corresponding to the at least one of the first target values, in which case, transposition processing may be performed on the elements on the at least one group of to-be-exchanged positions in the target data according to the target transposition algorithm to obtain the encrypted data.

Illustratively, illustration is made taking the preset value 1 as an example. Assume that a first target value is 1, and that a group of to-be-exchanged positions corresponding to the first target value are Bit 0 and Bit 31. Since the first target value matches the preset value, transposition processing may be performed on an element corresponding to Bit 0 in the target data and an element on Bit 31 in the target data.

With a method for processing data according to embodiments of this disclosure, it is enabled to determine, based on a plurality of groups of to-be-exchanged positions as indicated by the target transposition algorithm, a plurality of groups of first data in the target key that are in one-to-one correspondence with the plurality of groups of to-be-exchanged positions, and obtain a plurality of first target values by performing an XOR operation on elements in each group of first data of the plurality of groups of first data, which therefore enables to perform, according to the target transposition algorithm, transposition processing on the target data based on a matching relation between the first target values and a preset value, which changes the target data from plaintext to ciphertext. Thereby, after the ciphertext has been stored at the target memory address of the target memory, when the target memory is subjected to attack, it is not easy for originally stored data to be obtained directly, which thus enables to avoid information leakage, which then guarantees data security.

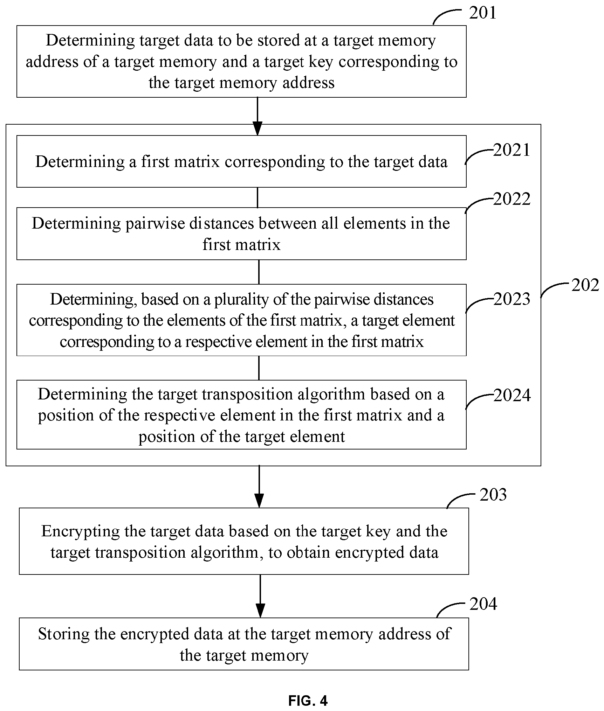

As shown in FIG. 4, based on the embodiment shown in FIG. 2, step 202 may include steps as follows.

Step 2021, Determining a first matrix corresponding to the target data

In some embodiments, the target data are binary data, and in a representation of binary data, a rightmost bit is generally referred to as a lowest bit (also referred to as a 0-th bit), and a leftmost bit is referred to as a highest bit; therefore, bit weights of respective bits in binary data increase from right to left; therefore, the target data may first be divided into a plurality of groups of identical numbers of bits according to bit weights, then respective sub-matrices are filled with elements of the respective groups in sequence, bit by bit, and these sub-matrices are spliced, to obtain the first matrix corresponding to the target data, where a total number of elements in the first matrix is identical to a number of bits of the target data, and a coordinate of an element in the first matrix may be denoted by (X, Y), where X represents a row coordinate, and Y represents a column coordinate.

Illustratively, illustration is made taking that the target data are 32-bit binary data as an example. When the target data are 32-bit binary data, i.e., the target data are bit 0 to bit 31 from right to left, the target data may be divided into two groups, where a first group of the two groups is constituted by the lower 16 bits (i.e., bit 0 to bit 15), and a second group of the two groups is constituted by the upper 16 bits (i.e., bit 16 to bit 31); a corresponding 4×4 matrix is filled with the lower 16 bits of the first group in sequence, bit by bit, to obtain a first sub-matrix, and another corresponding 4×4 matrix is filled with the upper 16 bits of the second group in sequence, bit by bit, to obtain a second sub-matrix, and then, the first sub-matrix and the second sub-matrix are spliced to obtain a 4×8 matrix, where the 4×8 matrix is the first matrix corresponding to the target data. A 4×8 matrix as shown in Table 1 below is a first matrix of 32 bits:

Table 1

| 0 | 1 | 2 | 3 | 16 | 17 | 18 | 19 |
|---|---|---|---|----|----|----|----|
| 4 | 5 | 6 | 7 | 20 | 21 | 22 | 23 |
| 8 | 9 | 10 | 11 | 24 | 25 | 26 | 27 |
| 12 | 13 | 14 | 15 | 28 | 29 | 30 | 31 |

Since the total number of elements in the first matrix is identical to the number of bits of the target data, the total number of elements in the first matrix also differs for target data of different numbers of bits.

For example, when the target data are of 8 bits, the first matrix includes 8 elements; and when the target data are of 32 bits, the first matrix includes 32 elements.

Step 2022, Determining pairwise distances between all elements in the first matrix

In some embodiments, after obtaining the first matrix, coordinates of elements in the first matrix are determined first, and then the pairwise distances between the elements are determined based on the coordinates of the elements.

In some embodiments, the pairwise distances between the elements may be Manhattan distances, Euclidean distances, Hamming distances, or distances of other types, which is not limited in embodiments of this disclosure. Distances of different types are computed with different formulas; therefore, after a type of the pairwise distances between the elements that are to be computed has been determined, the pairwise distances between the elements in the first matrix may be computed based on the coordinates of the elements in combination with a formula corresponding to the type of the distances.

Illustratively, illustration is made taking that the pairwise distances between the elements are Manhattan distances as an example. Coordinates of any element A and element B in the first matrix may be expressed as A(x1, y1) and B(x2, y2), respectively, and therefore, a Manhattan distance between element A and element B may be computed a formula as follows:

$$|x1-x2| + |y1-y2|$$

Step 2023, Determining, based on a plurality of the pairwise distances corresponding to the elements of the first matrix, a target element corresponding to a respective element in the first matrix

The target element is an element with a farthest distance from the respective element.

In some embodiments, after distances of a respective element that is currently considered relative to any remaining elements in the first matrix are respectively determined, a plurality of distances corresponding to the respective element may be obtained, and then, an element corresponding to a farthest distance of the plurality of distances is selected to be the target element.

Illustratively, illustration is made taking as an example that the respective element is an element (x1, y1) in the first matrix, and that the pairwise distances between the elements are Manhattan distances. Assuming that the first matrix is a 4×8 matrix, Manhattan distances L1 to L31 of the respective element (x1, y1) to the other 31 elements may be computed. By comparing sizes of L1 to L31, a farthest distance L17 of L1 to L31 is determined. Since an element corresponding to the farthest distance L17 is an element (x1, y6), the element (x1, y6) is the target element corresponding to the respective element (x1, y1).

In some embodiments, in computing the plurality of the pairwise distances corresponding to the elements, if the target element with the farthest distance from the respective element has been determined, the respective element and the target element may be labeled as elements that are determined to be exchanged, and after that, the step 2022 and step 2023 may be performed again for an unprocessed element in the first matrix other than the respective element and the target element, and so on, until target elements corresponding to the respective elements are finally determined.

In some examples, a visited array may be created, to record the elements that are determined to be exchanged.

Step 2024, Determining the target transposition algorithm based on a position of the respective element in the first matrix and a position of the target element corresponding to the respective element

After target elements corresponding to the respective elements in the first matrix have been determined, taking a position of any one element in the first matrix and a position of a target element corresponding to the any one element as a group of to-be-exchanged positions, a plurality of groups of to-be-exchanged positions may be obtained, and thereby the plurality of groups of to-be-exchanged positions may be determined as the target transposition algorithm.

With a method for processing data according to embodiments of this disclosure, after a first matrix corresponding to the target data has been determined, a target element that has a farthest distance from a respective element in the first matrix is enabled to be determined based on a plurality of pairwise distances corresponding to elements of the first matrix, and a target transposition algorithm is enabled to be determined based on a position of the respective element in the first matrix and a position of the target element corresponding to the respective element. Therefore, transposition processing is performed on the target data using the target transposition algorithm by exchanging bits with a farthest distance, which enables to greatly disturb the original structure of the data, increase data complexity, and thereby make the data more difficult to parse and crack.

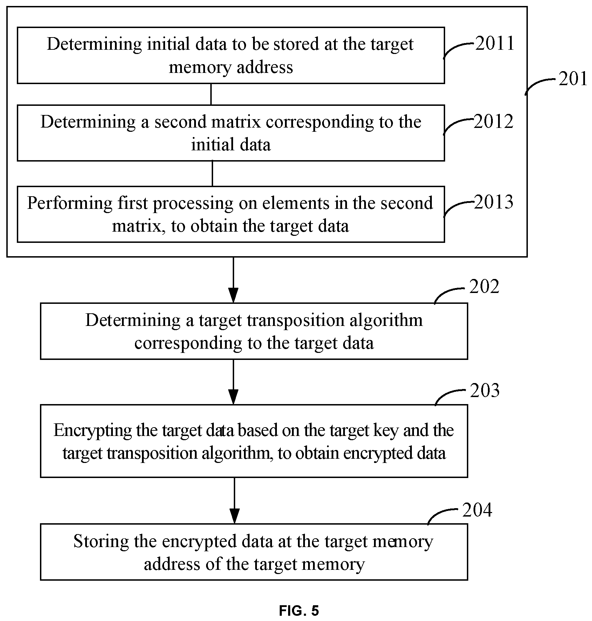

As shown in FIG. 5, based on the embodiment shown in FIG. 2, step 201 may include steps as follows.

Step 2011, Determining initial data to be stored at the target memory address

In some embodiments, the initial data may be obtained data that have not been encrypted, and the initial data are binary data. The initial data may include data of any one type as follows: operation state data, sensor data, user set data, map data, or other possible data, etc., which is not limited in embodiments of this disclosure. Initial data of different types may be obtained in different modes.

Illustratively, for field of intelligent car technology, when the initial data are operation state data, operation data of a component (such as an engine) of a vehicle, fault diagnosis data, and the like may be collected by an electronic control unit of the vehicle and set as the initial data; when the initial data are sensor data, information on an environment of the vehicle may be acquired in real time by various sensors (such as a camera, light detection and ranging LIDAR, etc.) and set as the initial data; when the initial data are map data, navigation data, path planning data, etc., may be obtained by an onboard navigation system or an online map service and set as the initial data; when the initial data are user set data, personalized data set by a user for the vehicle may be received by a central control system of the vehicle and set as the initial data.

Step 2012, Determining a second matrix corresponding to the initial data

In some embodiments, the initial data are binary data, and in a representation of binary data, a rightmost bit is generally referred to as a lowest bit (also referred to as a 0-th bit), and a leftmost bit is referred to as a highest bit; therefore, bit weights of respective bits in binary data increase from right to left; therefore, the initial data may first be divided into a plurality of groups of identical numbers of bits according to bit weights, then respective sub-matrices are filled with elements of the respective groups in sequence, bit by bit, and these sub-matrices are spliced, to obtain the second matrix corresponding to the initial data, where a total number of elements in the second matrix is identical to a number of bits of the initial data, and a coordinate of an element in the second matrix may be denoted by (X, Y), where X represents a row coordinate, and Y represents a column coordinate.

Illustratively, illustration is made taking that the initial data are 32-bit binary data as an example. When the initial data are 32-bit binary data, i.e., the initial data are bit 0 to bit 31 from right to left, the initial data may be divided into two groups, where a first group of the two groups is constituted by the lower 16 bits (i.e., bit 0 to bit 15), and a second group of the two groups is constituted by the upper 16 bits (i.e., bit 16 to bit 31); a corresponding $4 \times 4$ matrix is filled with the lower 16 bits of the first group in sequence, bit by bit, to obtain a first sub-matrix, and another corresponding $4 \times 4$ matrix is filled with the upper 16 bits of the second group in sequence, bit by bit, to obtain a second sub-matrix, and then, the first sub-matrix and the second sub-matrix are spliced to obtain a $4 \times 8$ matrix, where the $4 \times 8$ matrix is the second matrix corresponding to the initial data.

Since the total number of elements in the second matrix is identical to the number of bits of the initial data, the total number of elements in the second matrix also differs for initial data of different numbers of bits. For example, when the initial data are of 8 bits, the second matrix includes 8 elements; and when the initial data are of 32 bits, the second matrix includes 32 elements.

Step 2013, Performing first processing on elements in the second matrix, to obtain the target data

The first processing includes at least one of row transformation processing, column transformation processing, bit-wise NOT processing, and position exchange in a preset mode.

In some embodiments, the first processing may include one or more modes of processing. When the first processing includes one mode of processing, the one mode of processing may be any one mode of processing of: row transformation processing, column transformation processing, bit-wise NOT processing, and position exchange in a preset mode; when the first processing includes a plurality of modes of processing, the plurality of modes of processing may include at least two modes of processing of: row transformation processing, column transformation processing, bit-wise NOT processing, and position exchange in a preset mode.

When the first processing includes a plurality of modes of processing, a series of processing may be performed on the second matrix based on the plurality of modes of processing, and an order of execution of the plurality of modes of processing is not limited in embodiments of this disclosure.

In some examples, when the first processing is row transformation processing, performing row transformation processing on the elements of the second matrix refers to cyclic shift of elements in each row of the second matrix by a fixed unit in a certain direction.

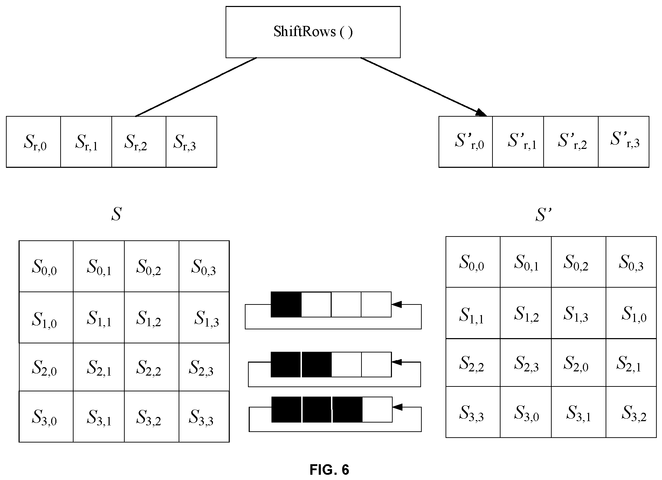

Illustratively, FIG. 6 is a diagram of row transformation processing ShiftRows according to embodiments of this disclosure. As shown in FIG. 6, the second matrix S is a $4 \times 4$ matrix, and each row of the second matrix includes: $S_{r,0}$, $S_{r,1}$, $S_{r,2}$, and $S_{r,3}$. Elements in a 0-th row are $S_{0,0}$, $S_{0,1}$, $S_{0,2}$, and $S_{0,3}$, elements in a 1-st row are $S_{1,0}$, $S_{1,1}$, $S_{1,2}$, and $S_{1,3}$, elements in a 2-nd row are $S_{2,0}$, $S_{2,1}$, $S_{2,2}$, and $S_{2,3}$, and elements in a 3-rd row are $S_{3,0}$, $S_{3,1}$, $S_{3,2}$, and $S_{3,3}$. In performing row transformation processing on the second matrix, elements of the 0-th row of the second matrix are not shifted, i.e., all the elements of the 0-th row of the second matrix remain unchanged; elements of the 1-st row of the second matrix are cyclically shifted to the left by 1 unit, i.e., the elements of the 1-st row become $S_{1,1}$, $S_{1,2}$, $S_{1,3}$, and $S_{1,0}$; elements of the 2-nd row of the second matrix are cyclically shifted to the left by 2 units, i.e., the elements of the 2-nd row become $S_{2,2}$, $S_{2,3}$, $S_{2,0}$, and $S_{2,1}$; elements of the 3-rd row of the second matrix are cyclically shifted to the left by 3 units, i.e., the elements of the 3-rd row become $S_{3,3}$, $S_{3,0}$, $S_{3,1}$ and $S_{3,2}$. Thus, all elements of a new matrix S' obtained constitute the target data.

In some examples, when the first processing is column transformation processing, performing column transformation processing on the elements of the second matrix refers to shifting elements in each column of the second matrix in a certain direction (such as upward or downward) by a number of rows.

Illustratively, illustration is made taking that the second matrix is a $4 \times 4$ matrix as an example. Assume that elements of a 0-th column of the second matrix are $D_{0,0}$, $D_{1,0}$, $D_{2,0}$, and $D_{3,0}$, elements of a 1-st column of the second matrix are $D_{0,1}$, $D_{1,1}$, $D_{2,1}$, and $D_{3,1}$, elements of a 2-nd column of the second matrix are $D_{0,2}$, $D_{1,2}$, $D_{2,2}$, and $D_{3,2}$, and elements of a 3-rd column of the second matrix are $D_{0,3}$, $D_{1,3}$, $D_{2,3}$, and $D_{3,3}$. In performing column transformation processing on the second matrix, elements of the 0-th column of the second matrix are shifted downward by 3 rows, i.e., the elements of the 0-th column of the second matrix become $D_{1,0}$, $D_{2,0}$, $D_{3,0}$, and $D_{0,0}$; elements of the 1-st column of the second matrix are shifted downward by two rows, i.e., the elements of the 1-st row become $D_{2,1}$, $D_{3,1}$, $D_{0,1}$, and $D_{1,1}$; elements of the second column of the second matrix are shifted downward by 1 row, i.e., the elements of the second column become $D_{3,2}$, $D_{0,2}$, $D_{1,2}$, and $D_{2,2}$; and elements of the 3-rd column of the second matrix are not shifted, i.e., all the elements of the 3-rd column remain unchanged. Thus, all elements of a new matrix obtained constitute the target data.

In other examples, performing column transformation processing on the elements of the second matrix may also refer to shifting one or more columns in the second matrix in a horizontal direction.

Illustratively, assuming that the second matrix is a 4×8 matrix, if column transformation processing is performed on the elements of the second matrix, respective columns of the second matrix may be shifted to the right in sequence, which specifically includes: shifting the 0-th column of the second matrix to the right 7 times, shifting the 1-st column of the second matrix to the right 6 times, shifting the 2-nd column of the second matrix to the right 5 times, shifting the 3-rd column of the second matrix to the right 4 times, shifting the 4-th column of the second matrix to the right 3 times, shifting the 5-th column of the second matrix to the right 2 times, shifting the 6-th column of the second matrix to the right 1 time, and shifting the 7-th column of the second matrix to the right 0 time.

In some examples, when the first processing is bit-wise NOT processing, performing bit-wise NOT processing on the elements of the second matrix refers to negating some or all of the elements in the second matrix, i.e., changing 0 to 1, or changing 1 to 0.

Illustratively, assuming an 8-bit binary number 01011010, each bit of the number is negated to obtain a new binary number 10100101.

In some examples, the position exchange in a preset mode is a permutation (P) operation, i.e., permuting bits of input data to specific positions based on a permutation table, so as to shuffle an order of the original data, to rearrange the data. When the first processing is position exchange in a preset mode, performing position exchange in a preset mode on elements of the second matrix refers to permuting the elements of the second matrix to specific positions according to the permutation table, to form a new matrix.

Illustratively, the permutation table is an array of 32 elements, where the elements respectively are an integer between 1 and 32. A permutation table according to embodiments of this disclosure is shown as follows:

$$7, 17, 28, 29, 20, 16, 12, 21$$
$$3, 32, 27, 14, 8, 9, 24, 2$$

$$15, 10, 23, 1, 31, 5, 18, 26$$
$$19, 4, 22, 13, 25, 30, 11, 6$$

For input data data_in of 32 bits, original positions of the bits of the input data are as follows:

$$1, 2, 3, 4, 5, 6, 7, 8$$
$$9, 10, 11, 12, 13, 14, 15, 16$$
$$17, 18, 19, 20, 21, 22, 23, 24$$
$$25, 26, 27, 28, 29, 30, 31, 32$$

Permutation processing is performed on the bits of the input data data_i through the above permutation table, where data_i [7-1] is permuted to the position 1 in the input data, data_ita [17-1] is permuted to the position 2, and so on, and output data data_out of 32 bits are obtained by re-splicing, and are the target data, where the target data may be represented as follows:

data_out[31: 0] = {data_i[7-1], data_i[17-1], data_i[28-1], data_i[29-1], data_i[20-1], data_i[16-1], data_i[12-1], data_i[21-1], data_i[3-1], data_i[32-1], data_i[27-1], data_i[14-1], data_i[8-1], data_i[9-1], data_i[24-1], data_i[2-1], data_i[15-1], data_i[10-1], data_i[23-1], data_i[1-1], data_i[31-1], data_i[5-1], data_i[18-1], data_i[26-1], data_i[19-1], data_i[4-1], data_i[22-1], data_i[13-1], data_i[25-1], data_i[30-1], data_i[11-1], data_i[6-1]}

With a method for processing data according to embodiments of this disclosure, after initial data to be stored at the target memory address have been determined, a second matrix corresponding to the initial data is determined, and a series of processing are performed on elements of the second matrix to obtain the target data, which therefore implements confusion of the initial data, thereby making the initial data difficult to be identified in storage, thus improving data security, preventing data leakage.

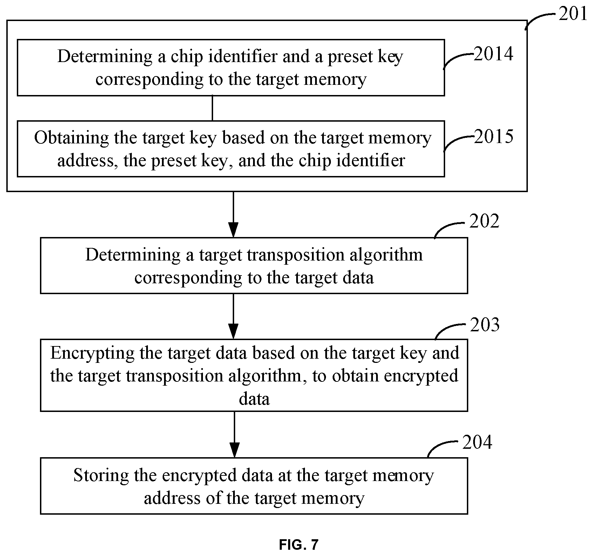

As shown in FIG. 7, based on the embodiment shown in FIG. 2, step 201 may include steps as follows.

Step 2014, Determining a chip identifier and a preset key corresponding to the target memory

A number of bits of the target memory address, a number of bits of the preset key, and a number of bits of the chip identifier are identical.

In some embodiments, the chip identifier is an identifier that uniquely identifies each chip, with different chips corresponding to different chip identifiers. When the target memory is a standalone memory chip, the chip identifier is binary data for uniquely identifying the memory chip; when the target memory is a hardware unit inside a target chip, the chip identifier is binary data for uniquely identifying the target chip. For example, the chip identifier is a chip serial number.

In some examples, the chip identifier may be a chip serial number written by a chip manufacturer at the time the chip is shipped from the factory, or a custom serial number written by a user through a secure protocol.

In some examples, the chip identifier may be obtained by accessing a specific register in the chip; or, an instruction requesting to obtain the chip identifier may be sent to the chip, to obtain the chip identifier.

In some embodiments, the preset key may be a constant of a fixed length, that is, different chips of one chip product correspond to identical preset keys. For example, the preset key is binary data indicating version information of the chip.

In some examples, the preset key may be obtained by accessing a specific register in the chip; or, an instruction requesting to obtain the preset key may be sent to the chip, to obtain the preset key.

Step 2015, Obtaining the target key based on the target memory address, the preset key, and the chip identifier

In some embodiments, the target key is obtained based on the chip identifier. Therefore, the target key is associated with the target memory address. In addition, as different chips correspond to different chip identifiers, different chips correspond to different target keys, i.e., implementing one key per device.

In some embodiments, the target key is obtained combining the target memory address, the preset key, and the chip identifier, and therefore the target key is related to the target memory address; therefore, for the same target memory, different target keys are obtained for different memory addresses in the target memory.

In some embodiments, the step 2015 may specifically include: performing second processing on the preset key and the chip identifier, to obtain a first encrypted chip identifier; performing third processing on the target memory address, to obtain a first encrypted memory address; and obtaining the target key based on the first encrypted chip identifier and the first encrypted memory address.

In some examples, the second processing may include one or a plurality of modes of processing. When the second processing includes a plurality of modes of processing, a series of processing may be performed on the preset key and the chip identifier based on the plurality of modes of processing, and an order of execution of the plurality of modes of processing is not limited in embodiments of this disclosure.

In some embodiments, the step of performing second processing on the preset key and the chip identifier, to obtain a first encrypted chip identifier may specifically include: performing an XOR operation on the preset key and the chip identifier, to obtain a second encrypted chip identifier; and performing fourth processing on the second encrypted chip identifier to obtain the first encrypted chip identifier, where the fourth processing includes at least one of row transformation processing and column transformation processing.

In some embodiments, the preset key and the chip identifier are binary data, and the XOR operation is a binary operation mode. In performing an XOR operation on the preset key and the chip identifier, the two binary data, i.e., the preset key and the chip identifier, are to be compared bit by bit; if a corresponding pair on a bit are different, the result for the bit is 1; and if a corresponding pair on a bit are identical, the result for the bit is 0, and thus the second encrypted chip identifier may be obtained.

In some examples, the fourth processing may include one or more modes of processing. When the fourth processing includes one mode of processing, the fourth processing may be row transformation processing or column transformation processing, or, when the fourth processing includes a plurality of modes of processing, the plurality of modes of processing include row transformation processing and column transformation processing. In addition, when the fourth processing includes a plurality of modes of processing, a series of processing may be performed on the preset key and the chip identifier based on the plurality of modes of processing, and an order of execution of the plurality of modes of processing is not limited in embodiments of this disclosure.

For performing row transformation processing and / or column transformation processing on the second encrypted chip identifier, one may refer to description in relation to performing the first processing on the elements in the second matrix in an embodiment as described above, which is not repeated in embodiments of this disclosure.

In some embodiments, the step of performing third processing on the target memory address, to obtain a first encrypted memory address may specifically include: processing the target memory address based on a preset lookup table, to obtain a second encrypted memory address; and performing fifth processing on the second encrypted memory address to obtain the first encrypted memory address, where the fifth processing includes at least one of row transformation processing and column transformation processing.

In some examples, the preset lookup table may be a nonlinear lookup table, for converting an input bit string of a fixed length into an output bit string of a same or different length, that is, a mapping between the output bit string and the input bit string may be implemented by looking up the preset lookup table. After the preset lookup table has been obtained, the target memory address may be converted into a second encrypted memory address of the same length by searching the preset lookup table.

Illustratively, illustration is made taking as an example that the preset lookup table is an $8\times8$ lookup table (8-bit input, 8-bit output), and that the target memory address is of 32 bits. The preset lookup table is as shown in Table 2 below:

Table 2

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | D6 | 100 | E9 | FE | CC | E1 | 3D | B7 | 16 | B6 | 14 | C2 | 28 | FB | 2C | 05 |
| 1 | 2B | 67 | 9A | 76 | 2A | BE | 04 | C3 | AA | 44 | 13 | 26 | 49 | 86 | 06 | 99 |
| 2 | 9C | 42 | 50 | F4 | 101 | EF | 98 | 7A | 33 | 54 | 0B | 43 | ED | CF | AC | 62 |
| 3 | E4 | B3 | 1C | A9 | C9 | 08 | E8 | 95 | 80 | DF | 94 | FA | 75 | 8F | 3F | A6 |
| 4 | 47 | 07 | A7 | FC | F3 | 73 | 17 | BA | 83 | 59 | 3C | 19 | E6 | 85 | 4F | A8 |
| 5 | 68 | 6B | 81 | B2 | 71 | 64 | DA | 8B | F8 | EB | 0F | 4B | 70 | 56 | 9D | 35 |
| 6 | 1E | 24 | 0E | 5E | 63 | 58 | D1 | A2 | 25 | 22 | 7C | 3B | 01 | 21 | 78 | 87 |
| 7 | D4 | 00 | 46 | 57 | 9F | D3 | 27 | 52 | 4C | 36 | 02 | E7 | A0 | C4 | C8 | 9E |
| 8 | EA | BF | 8A | D2 | 40 | C7 | 38 | B5 | A3 | F7 | F2 | CE | F9 | 61 | 15 | A1 |
| 9 | E0 | AE | 5D | A4 | 9B | 34 | 1A | 55 | AD | 93 | 32 | 30 | F5 | 8C | B1 | E3 |
| A | 1D | F6 | E2 | 2E | 82 | 66 | CA | 60 | C0 | 29 | 23 | AB | 0D | 53 | 4E | 6F |
| B | D5 | DB | 37 | 45 | DE | FD | 8E | 2F | 03 | FF | 6A | 72 | 6D | 6C | 5B | 51 |
| C | 8D | 1B | AF | 100 | BB | DD | BC | 7F | 11 | D9 | 5C | 41 | 1F | 10 | 5A | D8 |
| D | 0A | C1 | 31 | 88 | A5 | CD | 7B | BD | 2D | 74 | D0 | 12 | B8 | E5 | B4 | B0 |
| E | 89 | 69 | 97 | 4A | 0C | 96 | 77 | 7E | 65 | B9 | F1 | 09 | C5 | 6E | C6 | 84 |
| F | 18 | F0 | 7D | EC | 3A | DC | 4D | 20 | 79 | EE | 5F | 3E | D7 | CB | 39 | 48 |

Since one byte is 8 bits, a target memory address of 32 bits may be divided into 4 bytes and expressed as (B0, B1, B2, and B3), and substituting the bytes using the preset lookup table specifically includes: searching the preset lookup table for substitute values corresponding to the bytes by taking the upper 4 bits of the target memory address as a row index, and the lower 4 bits of the target memory address as a column index. For example, the value of B0 is $0\times32$, where the row corresponding to the upper 4 bits is 3, and the column corresponding to the lower 4 bits is 2; by searching the preset lookup table, the value 1C of the 3-rd row and the 2-nd column in the preset lookup table may be obtained; therefore, the value of B0 is replaced by $0\times1C$, and so on, until other bytes are replaced, and thereby, data constituted by the replacement values are the second encrypted memory address.

In some examples, the fifth processing may include one or more modes of processing. When the fifth processing includes one mode of processing, the fifth processing may be row transformation processing or column transformation processing, or, when the fifth processing includes a plurality of modes of processing, the plurality of modes of processing include row transformation processing and column transformation processing. In addition, when the fifth processing includes a plurality of modes of processing, a series of processing may be performed on the second encrypted memory address based on the plurality of modes of processing, and an order of execution of the plurality of modes of processing is not limited in embodiments of this disclosure.

For performing row transformation processing and / or column transformation processing on the second encrypted memory address, one may refer to description in relation to performing the first processing on the elements in the second matrix in an embodiment as described above, which is not repeated in embodiments of this disclosure.

In some embodiments, the step of obtaining the target key based on the first encrypted chip identifier and the first encrypted memory address may specifically include: performing an XOR operation on the first encrypted chip identifier and the first encrypted memory address, to obtain a first key; and performing sixth processing on the first key to obtain the target key, where the sixth processing includes at least one of bit-wise NOT processing and position exchange in a preset mode.

In some embodiments, the first encrypted chip identifier and the first encrypted memory address are binary data, and the XOR operation is a binary operation mode. In performing an XOR operation on the first encrypted chip identifier and the first encrypted memory address, the two binary data, i.e., the first encrypted chip identifier and the first encrypted memory address, are to be compared bit by bit; if a corresponding pair on a bit are different, the result for the bit is 1; and if a corresponding pair on a bit are identical, the result for the bit is 0, and thus the first key may be obtained.

In some examples, the sixth processing may include one mode of processing or a plurality of modes of processing. When the sixth processing includes one mode of processing, the sixth processing may be row transformation processing or column transformation processing, or, when the sixth processing includes a plurality of modes of processing, the plurality of modes of processing include bit-wise NOT processing and position exchange in a preset mode. In addition, when the sixth processing includes a plurality of modes of processing, a series of processing may be performed on the first key based on the plurality of modes of processing, and an order of execution of the plurality of modes of processing is not limited in embodiments of this disclosure.

For performing bit-wise NOT processing and / or position exchange in a preset mode on the first key, one may refer to description in relation to performing the first processing on the elements in the second matrix in an embodiment as described above, which is not repeated in embodiments of this disclosure.

With a method for processing data according to embodiments of this disclosure, after a chip identifier and a preset key corresponding to the target memory have been determined, it is enabled to first perform a series of processing on the preset key and the chip identifier to obtain a first encrypted chip identifier, and perform a series of processing on the target memory address to obtain a first encrypted memory address. Therefore, the target key obtained by performing a series of processing on the first encrypted chip identifier and the first encrypted memory address is more complex, thereby reducing a risk of key leakage, i.e., improving key security.

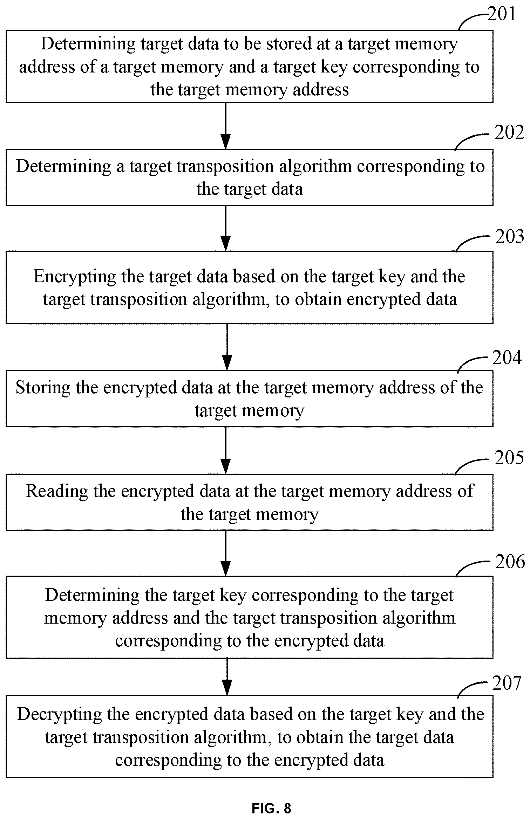

As shown in FIG. 8, based on the embodiment shown in FIG. 2, the method for processing data according to embodiments of this disclosure may further include steps as follows.

Step 205, Reading the encrypted data at the target memory address of the target memory

In some embodiments, after determining that the data are stored at the target memory address of the target memory, a read instruction may be sent to the target memory address, to obtain the encrypted data.

Step 206, Determining the target key corresponding to the target memory address and the target transposition algorithm corresponding to the encrypted data

In some embodiments, different target memory addresses correspond to different target keys, and therefore, different target keys may be obtained when the encrypted data are stored at different memory addresses.

In some examples, the target key and the target transposition algorithm may be obtained by accessing a specific register in the chip; or, instructions requesting to obtain the target key and the target transposition algorithm may be sent respectively to the chip, to obtain the target key and the target transposition algorithm.

Step 207, Decrypting the encrypted data based on the target key and the target transposition algorithm, to obtain the target data corresponding to the encrypted data

In some embodiments, the step 207 may specifically include: determining, based on a plurality of groups of to-be-exchanged positions as indicated by the target transposition algorithm, a plurality of groups of first data in the target key that are in one-to-one correspondence with the plurality of groups of to-be-exchanged positions; performing an XOR operation on elements in each group of first data of the plurality of groups of first data, to obtain a plurality of first target values; and performing, according to the target transposition algorithm, transposition processing on the encrypted data based on a matching relation between the first target values and a preset value, to obtain the target data.

For the performing, according to the target transposition algorithm, transposition processing on the encrypted data based on a matching relation between the first target values and a preset value, to obtain the target data, one may refer to elaboration of the performing, according to the target transposition algorithm, transposition processing on the target data based on a matching relation between the first target values and a preset value, to obtain the encrypted data, which is not elaborated in embodiments of this disclosure.

In other embodiments, if the target data are unencrypted data, no processing is required. If the target data are data obtained by encrypting the initial data, reverse processing is to be performed on the target data by referring to a mode of processing the initial data in an embodiment as described above, to obtain the initial data.

In some examples, when the target data are data obtained by performing position exchange in a preset mode on the initial data, a reverse operation is to be performed on the target data through a reverse permutation table, to obtain the initial data. In computing the reverse permutation table, it is to determine positions of respective elements in a permutation table used in encryption, and write the positions in respective positions of the reverse permutation table, specific steps of which are as follows.

(1) A reverse permutation table of a size identical to that of the permutation table is created.
(2) The reverse permutation table may be obtained by traversing respective elements in the permutation table and recording positions of said respective elements in the reverse permutation table.

With a method for processing data according to embodiments of this disclosure, after the encrypted data at the target memory address of the target memory have been read, the target key corresponding to the target memory address and the target transposition algorithm corresponding to the encrypted data are to be determined, and the encrypted data are to be decrypted based on the target key and the target transposition algorithm, to enable to obtain the target data corresponding to the encrypted data, which therefore ensures that the data stored in the target memory are stored in form of ciphertext rather than plaintext, and thereby an unauthorized person cannot directly obtain the original data even by attacking the target memory, thus improving data security, whereas an authorized person may decrypt the encrypted data through the determined target key and the target transposition algorithm, which ensures to enable normal obtaining of the original data.

Illustrative apparatus

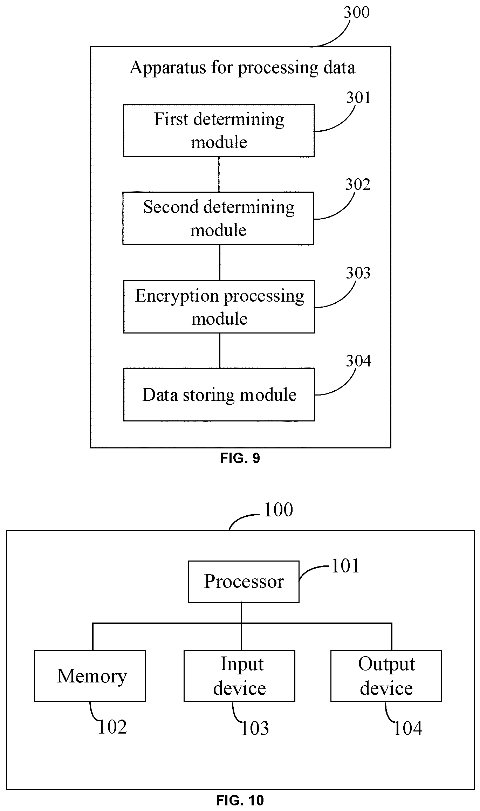

FIG. 9 is a diagram of a structure of an apparatus for processing data according to an illustrative embodiment of this disclosure. The apparatus for processing data may be provided in an electronic device such as a terminal device, a server, or the like, or an object such as a vehicle, and implement the method for processing data according to any one of the embodiments of this disclosure.

As shown in FIG. 9, the apparatus 300 may include:

a first determining module 301 configured for determining target data to be stored at a target memory address of a target memory and a target key corresponding to the target memory address;

a second determining module 302 configured for determining a target transposition algorithm corresponding to the target data;

an encryption processing module 303 configured for encrypting the target data based on the target key and the target transposition algorithm, to obtain encrypted data; and

a data storing module 304 configured for storing the encrypted data at the target memory address of the target memory.

In possible implementation method, the encryption processing module is specifically configured for determining, based on a plurality of groups of to-be-exchanged positions as indicated by the target transposition algorithm, a plurality of groups of first data in the target key that are in one-to-one correspondence with the plurality of groups of to-be-exchanged positions; performing an XOR operation on elements in each group of first data of the plurality of groups of first data, to obtain a plurality of first target values; and performing, according to the target transposition algorithm, transposition processing on the target data based on a matching relation between the first target values and a preset value, to obtain the encrypted data.

In possible implementation, the encryption processing module is specifically configured for, in response to the matching relation being that at least one of the first target values matches the preset value, performing, according to the target transposition algorithm, transposition processing on elements on at least one group of to-be-exchanged positions in the target data to obtain the encrypted data, where the at least one group of to-be-exchanged positions is at least one group of to-be-exchanged positions of the plurality of groups of to-be-exchanged positions that corresponds to the at least one of the first target values.

In possible implementation, the second determining module is specifically configured for determining a first matrix corresponding to the target data; determining pairwise distances between all elements in the first matrix; determining, based on a plurality of the pairwise distances corresponding to the elements of the first matrix, a target element corresponding to a respective element in the first matrix, where the target element is an element with a farthest distance from the respective element; and determining the target transposition algorithm based on a position of the respective element in the first matrix and a position of the target element corresponding to the respective element.

In possible implementation, the first determining module is specifically configured for determining initial data to be stored at the target memory address; determining a second matrix corresponding to the initial data; and performing first processing on elements in the second matrix, to obtain the target data, where the first processing includes at least one of row transformation processing, column transformation processing, bit-wise NOT processing, and position exchange in a preset mode.

In possible implementation method, the first determining module is specifically configured for determining a chip identifier and a preset key corresponding to the target memory, where a number of bits of the target memory address, a number of bits of the preset key, and a number of bits of the chip identifier are identical; and obtaining the target key based on the target memory address, the preset key, and the chip identifier.

In possible implementation method, the first determining module is specifically configured for performing second processing on the preset key and the chip identifier, to obtain a first encrypted chip identifier; performing third processing on the target memory address, to obtain a first encrypted memory address; and obtaining the target key based on the first encrypted chip identifier and the first encrypted memory address.

In possible implementation method, the first determining module is specifically configured for performing an XOR operation on the preset key and the chip identifier, to obtain a second encrypted chip identifier; and performing fourth processing on the second encrypted chip identifier to obtain the first encrypted chip identifier, where the fourth processing includes at least one of row transformation processing and column transformation processing.

In possible implementation method, the first determining module is configured for processing the target memory address based on a preset lookup table, to obtain a second encrypted memory address; and performing fifth processing on the second encrypted memory address to obtain the first encrypted memory address, where the fifth processing includes at least one of row transformation processing and column transformation processing.

In possible implementation method, the first determining module is specifically configured for performing an XOR operation on the first encrypted chip identifier and the first encrypted memory address, to obtain a first key; and performing sixth processing on the first key to obtain the target key, where the sixth processing includes at least one of bit-wise NOT processing and position exchange in a preset mode.

In possible implementation, the apparatus 300 may further include: a data reading module, configured for reading the encrypted data at the target memory address of the target memory; a third determining module, configured for determining the target key corresponding to the target memory address and the target transposition algorithm corresponding to the encrypted data; and a decryption processing module, configured for decrypting the encrypted data based on the target key and the target transposition algorithm, to obtain the target data corresponding to the encrypted data.

With an apparatus for processing data according to embodiments of this disclosure, after target data to be stored at a target memory address of a target memory and a target key corresponding to the target memory address have been determined, it is enabled to determine a target transposition algorithm corresponding to the target data, which therefore enables to encrypt the target data based on the target key and the target transposition algorithm to obtain encrypted data, and then store the encrypted data at the target memory address of the target memory. The target data to be stored are enabled to be encrypted first based on the target key and the target transposition algorithm, which therefore enables to change the target data from plaintext to ciphertext, which therefore enables to store the ciphertext at the target memory address of the target memory. Thereby, when the target memory is subjected to attack, it is not easy for originally stored data to be obtained directly, which thus enables to avoid information leakage, which then guarantees data security.

In addition, with a solution according to this disclosure, the target data to be stored are encrypted based on the target key and the target transposition algorithm, which therefore matches a feature of bit-wise programming of the non-volatile memory, and will not impact bit-wise data programming of the non-volatile memory, thereby supporting programming at minimum data granularity while guaranteeing data security.

Illustrative electronic device

FIG. 10 is a diagram of a structure of an electronic device according to embodiments of this disclosure, which includes at least one processor 101 and a memory 102.

The processor 101 may be a central processing unit (CPU) or a processing unit of another form capable of processing data and / or executing an instruction, and may control another component in the electronic device 100 to perform a desired function.

The memory 102 may include one or more computer program products, which may include various forms of computer readable storage media, such as a volatile memory and / or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 101 may execute the one or more computer program instructions to implement the method for processing data according to the various embodiments of this disclosure that are described above and/or other desired functions.

In an example, the electronic device 100 may further include an input device 103 and an output device 104. These components are connected to each other through a bus system and/or another form of connection mechanism (not shown).

The input device 103 may include various types of sensors, including, but not limited to: a ranging sensor, configured for detecting a distance between a target object and a vehicle; and an image sensor, configured for acquiring information on an environment of the vehicle. In some examples, the input device may further include: a pressure sensor, configured for detecting seat pressure, to determine presence and a position of a passenger; a temperature sensor, configured for monitoring temperature inside a cabin; a humidity sensor, configured for monitoring humidity inside the cabin, to assist in regulating in-vehicle environment; an air quality sensor, configured for monitoring in-vehicle air quality, such as carbon dioxide, volatile organic compounds (VOCs), etc.; a light sensor, configured for detecting light intensity inside and outside the vehicle; an acceleration sensor, configured for detecting change in the vehicle's acceleration; a distance sensor, configured for measuring a distance between the vehicle and another object; a touchscreen sensor, configured for interaction with the vehicle's infotainment system; biometric sensors, such as for fingerprint identification, face identification, etc.; a heart rate monitor, configured for monitoring a driver's heart rate; a sound sensor, configured for voice recognition and interaction, to implement voice control functionality; a seat sensor, configured for monitoring seat usage, such as a seat occupancy state, passenger build, etc.; and wireless communication sensors, such as Bluetooth, Wi-Fi, etc., configured for connection with an intelligent device, to implement data transmission and remote control. In addition to the examples given above, the input device may also include more or less sensors, which is not elaborated here.

The output device 104 may output various information or signals to other hardware or devices, where the other hardware or devices may include a display, onboard audio, a seat, a window, a steering wheel, etc., as well as a communication network and a remote output device connected thereto, etc. The display may include a plurality of different display screens, such as a driver display screen, a passenger display screen, a backseat display screen, etc., and the onboard audio may include a plurality of speakers provided at different positions in a vehicle cabin, where the different display screens or speakers may all operate in a stand-alone manner.

Of course, for simplicity, FIG. 10 shows only some of components in the electronic device 100 that are related to this disclosure, and components such as a bus and an input/output interface are omitted. In addition, according to specific application situations, the electronic device 100 may further include any other appropriate components.

Illustrative computer program product and computer readable storage medium

In addition to the foregoing method and device, embodiments of this disclosure may also provide a computer program product, which includes computer program instructions. When the instructions are run by a processor, the processor is enabled to perform the steps, of the method for processing data according to the embodiments of this disclosure, that are described in the "Illustrative method" section as described above.

The computer program product may be a program code, written with one or any combination of a plurality of programming languages, that is configured for performing the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method for processing data according to the embodiments of this disclosure, that are described in the "Illustrative method" section as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for processing data, comprising:

    determining (201) target data to be stored at a target memory address of a target memory and a target key corresponding to the target memory address;

determining (202) a target transposition algorithm corresponding to the target data;
encrypting (203) the target data based on the target key and the target transposition algorithm, to obtain encrypted data; and
storing (204) the encrypted data at the target memory address of the target memory.

2. The method according to claim 1, wherein the encrypting the target data based on the target key and the target transposition algorithm, to obtain encrypted data comprises:

determining (2031), based on a plurality of groups of to-be-exchanged positions as indicated by the target transposition algorithm, a plurality of groups of first data in the target key that are in one-to-one correspondence with the plurality of groups of to-be-exchanged positions;
performing (2032) an XOR operation on elements in each group of first data of the plurality of groups of first data, to obtain a plurality of first target values; and
performing (2033), according to the target transposition algorithm, transposition processing on the target data based on a matching relation between the first target values and a preset value, to obtain the encrypted data.

3. The method according to claim 2, wherein the performing, according to the target transposition algorithm, transposition processing on the target data based on a matching relation between the first target values and a preset value, to obtain the encrypted data comprises:
in response to the matching relation being that at least one of the first target values matches the preset value, performing, according to the target transposition algorithm, transposition processing on elements on at least one group of to-be-exchanged positions in the target data to obtain the encrypted data, wherein the at least one group of to-be-exchanged positions is at least one group of to-be-exchanged positions of the plurality of groups of to-be-exchanged positions that corresponds to the at least one of the first target values.

4. The method according to claim 1, wherein the determining a target transposition algorithm corresponding to the target data comprises:

determining (2021) a first matrix corresponding to the target data;
determining (2022) pairwise distances between all elements in the first matrix;
determining (2023), based on a plurality of the pairwise distances corresponding to the elements of the first matrix, a target element corresponding to a respective element in the first matrix, wherein the target element is an element with a farthest distance from the respective element; and
determining (2024) the target transposition algorithm based on a position of the respective element in the first matrix and a position of the target element corresponding to the respective element.

5. The method according to claim 1, wherein the determining target data to be stored at a target memory address of a target memory comprises:

determining (2011) initial data to be stored at the target memory address;
determining (2012) a second matrix corresponding to the initial data; and
performing (2013) first processing on elements in the second matrix, to obtain the target data,
wherein the first processing comprises at least one of row transformation processing, column transformation processing, bit-wise NOT processing, and position exchange in a preset mode.

6. The method according to claim 1, wherein the determining target data to be stored at a target memory address of a target memory and a target key corresponding to the target memory address comprises:

determining (2014) a chip identifier and a preset key corresponding to the target memory, wherein a number of bits of the target memory address, a number of bits of the preset key, and a number of bits of the chip identifier are identical; and
obtaining (2015) the target key based on the target memory address, the preset key, and the chip identifier.

7. The method according to claim 6, wherein the obtaining the target key based on the target memory address, the preset key, and the chip identifier comprises:

performing second processing on the preset key and the chip identifier, to obtain a first encrypted chip identifier;
performing third processing on the target memory address, to obtain a first encrypted memory address; and

obtaining the target key based on the first encrypted chip identifier and the first encrypted memory address.

8. The method according to claim 7, wherein the performing second processing on the preset key and the chip identifier, to obtain a first encrypted chip identifier comprises:

performing an XOR operation on the preset key and the chip identifier, to obtain a second encrypted chip identifier; and
performing fourth processing on the second encrypted chip identifier to obtain the first encrypted chip identifier, wherein the fourth processing comprises at least one of row transformation processing and column transformation processing.

9. The method according to claim 7, wherein the performing third processing on the target memory address, to obtain a first encrypted memory address comprises:

processing the target memory address based on a preset lookup table, to obtain a second encrypted memory address; and
performing fifth processing on the second encrypted memory address to obtain the first encrypted memory address, wherein the fifth processing comprises at least one of row transformation processing and column transformation processing.

10. The method according to claim 7, wherein the obtaining the target key based on the first encrypted chip identifier and the first encrypted memory address comprises:

performing an XOR operation on the first encrypted chip identifier and the first encrypted memory address, to obtain a first key; and
performing sixth processing on the first key to obtain the target key,
wherein the sixth processing comprises at least one of bit-wise NOT processing and position exchange in a preset mode.

11. The method according to claim 1, further comprising:

reading (205) the encrypted data at the target memory address of the target memory;
determining (206) the target key corresponding to the target memory address and the target transposition algorithm corresponding to the encrypted data; and
decrypting (207) the encrypted data based on the target key and the target transposition algorithm, to obtain the target data corresponding to the encrypted data.

12. An apparatus (300) for processing data, comprising:

a first determining module (301) configured for determining target data to be stored at a target memory address of a target memory and a target key corresponding to the target memory address;
a second determining module (302) configured for determining a target transposition algorithm corresponding to the target data;
an encryption processing module (303) configured for encrypting the target data based on the target key and the target transposition algorithm, to obtain encrypted data; and
a data storing module (304) configured for storing the encrypted data at the target memory address of the target memory.

13. The apparatus (300) according to claim 12, wherein the encryption processing module (303) is specifically configured for:

determining, based on a plurality of groups of to-be-exchanged positions as indicated by the target transposition algorithm, a plurality of groups of first data in the target key that are in one-to-one correspondence with the plurality of groups of to-be-exchanged positions;
performing an XOR operation on elements in each group of first data of the plurality of groups of first data, to obtain a plurality of first target values; and
performing, according to the target transposition algorithm, transposition processing on the target data based on a matching relation between the first target values and a preset value, to obtain the encrypted data.

14. A computer-readable storage medium, storing a computer program for implementing the method for processing data according to any one of claims 1 to 11.

15. An electronic device (100), comprising:

a processor (101); and
a memory (102) configured for storing processor-executable instructions, wherein
the processor (101) is configured for reading and executing the processor-executable instructions in the memory to implement the method for processing data according to any one of claims 1 to 11.

```
┌─────────────┐          ┌─────────────┐        ┌─────────────┐  ┌─────────────┐
│ Initial data│          │Target memory│        │  Preset key │  │Chip identifier│
└──────┬──────┘          │   address   │        └──────┬──────┘  └──────┬──────┘
       │                 └──────┬──────┘               │  XOR operation  │
       ▼                        ▼                       └────────┬────────┘
┌─────────────┐          ┌─────────────┐                         ▼
│Row transformation│     │Processing based on a│         ┌─────────────┐
│  processing  │          │preset lookup table│          │Row transformation│
└──────┬──────┘          └──────┬──────┘                 │  processing  │
       ▼                        ▼                         └──────┬──────┘
┌─────────────┐          ┌─────────────┐                         ▼
│Column transformation│  │Row transformation│               ┌─────────────┐
│  processing  │          │  processing  │                  │Column transformation│
└──────┬──────┘          └──────┬──────┘                    │  processing  │
       ▼                        ▼                            └──────┬──────┘
┌─────────────┐          ┌─────────────┐                            │
│Bit-wise NOT │          │Column transformation│     XOR operation  │
│  processing  │          │  processing  │                          │
└──────┬──────┘          └──────┬──────┘                            │
       ▼                        └──────────┬─────────────────────────┘
┌─────────────┐                            ▼
│Position exchange in a│            ┌─────────────┐
│  preset mode │                    │Bit-wise NOT │
└──────┬──────┘                     │  processing  │
       ▼                            └──────┬──────┘
┌─────────────┐                            ▼
│ Target data │                     ┌─────────────┐
└──────┬──────┘                     │Position exchange in│
       │                            │ a preset mode │
       │                            └──────┬──────┘
       │                                   ▼
       │                            ┌─────────────┐
       │                            │  Target key │
       │                            └──────┬──────┘
       └────────────────┬──────────────────┘
                        ▼
        ┌──────────────────────────────────────┐
        │Performing transposition processing on the│
        │target data based on the target transposition│
        │   algorithm and the target key        │
        └──────────────────┬───────────────────┘
                           ▼
              ┌─────────────────────┐
              │    Encrypted data   │
              └─────────────────────┘
```

FIG. 1

201

Determining target data to be stored at a target memory address of a target memory and a target key corresponding to the target memory address

202

Determining a target transposition algorithm corresponding to the target data

203

Encrypting the target data based on the target key and the target transposition algorithm, to obtain encrypted data

204

Storing the encrypted data at the target memory address in the target memory

FIG. 2

Determining target data to be stored at a target memory address of a target memory and a target key corresponding to the target memory address ⟋201

Determining a target transposition algorithm corresponding to the target data ⟋202

Determining, based on a plurality of groups of to-be-exchanged positions as indicated by the target transposition algorithm, a plurality of groups of first data in the target key that are in one-to-one correspondence with the plurality of groups of to-be-exchanged positions ⟋2031

Performing an XOR operation on elements in each group of first data of the plurality of groups of first data, to obtain a plurality of first target values ⟋2032

Performing, according to the target transposition algorithm, transposition processing on the target data based on a matching relation between the first target values and a preset value, to obtain the encrypted data ⟋2033

⟋203

Storing the encrypted data at the target memory address in the target memory ⟋204

**FIG. 3**

Determining target data to be stored at a target memory address of a target memory and a target key corresponding to the target memory address ⌐201

Determining a first matrix corresponding to the target data ⌐2021

Determining pairwise distances between all elements in the first matrix ⌐2022

Determining, based on a plurality of the pairwise distances corresponding to the elements of the first matrix, a target element corresponding to a respective element in the first matrix ⌐2023

⌐202

Determining the target transposition algorithm based on a position of the respective element in the first matrix and a position of the target element ⌐2024

Encrypting the target data based on the target key and the target transposition algorithm, to obtain encrypted data ⌐203

Storing the encrypted data at the target memory address of the target memory ⌐204

**FIG. 4**

Determining initial data to be stored at the target memory address ⌐2011

201

Determining a second matrix corresponding to the initial data ⌐2012

Performing first processing on elements in the second matrix, to obtain the target data ⌐2013

202

Determining a target transposition algorithm corresponding to the target data

203

Encrypting the target data based on the target key and the target transposition algorithm, to obtain encrypted data

204

Storing the encrypted data at the target memory address of the target memory

FIG. 5

**FIG. 6**

```
                                                                            ┌─201
  ┌──────────────────────────────────────────────────────────┐
  │  ┌────────────────────────────────────────────┐  ┌─2014   │
  │  │  Determining a chip identifier and a preset key │         │
  │  │     corresponding to the target memory     │           │
  │  └────────────────────────────────────────────┘          │
  │                         │                                 │
  │  ┌────────────────────────────────────────────┐  ┌─2015   │
  │  │  Obtaining the target key based on the target memory │   │
  │  │   address, the preset key, and the chip identifier │    │
  │  └────────────────────────────────────────────┘          │
  └──────────────────────────────────────────────────────────┘
                            │
                            ▼                           ┌─202
            ┌──────────────────────────────────────┐
            │  Determining a target transposition algorithm │
            │         corresponding to the target data │
            └──────────────────────────────────────┘
                            │
                            ▼                           ┌─203
            ┌──────────────────────────────────────┐
            │  Encrypting the target data based on the target key and │
            │  the target transposition algorithm, to obtain encrypted │
            │                      data            │
            └──────────────────────────────────────┘
                            │
                            ▼                           ┌─204
            ┌──────────────────────────────────────┐
            │  Storing the encrypted data at the target memory │
            │           address of the target memory │
            └──────────────────────────────────────┘
```

FIG. 7

201

Determining target data to be stored at a target memory address of a target memory and a target key corresponding to the target memory address

202

Determining a target transposition algorithm corresponding to the target data

203

Encrypting the target data based on the target key and the target transposition algorithm, to obtain encrypted data

204

Storing the encrypted data at the target memory address of the target memory

205

Reading the encrypted data at the target memory address of the target memory

206

Determining the target key corresponding to the target memory address and the target transposition algorithm corresponding to the encrypted data

207

Decrypting the encrypted data based on the target key and the target transposition algorithm, to obtain the target data corresponding to the encrypted data

FIG. 8

300

Apparatus for processing data

| First determining module | 301 |

| Second determining module | 302 |

| Encryption processing module | 303 |

| Data storing module | 304 |

**FIG. 9**

100

| Processor | 101 |

| Memory | Input device | Output device |

102      103      104

**FIG. 10**

Europäisches
Patentamt

European
Patent Office

Office européen
des brevets

# EUROPEAN SEARCH REPORT

**Application Number**

EP 25 19 3682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/013124 A1 (LITTLE HERBERT A [CA] ET AL) 9 January 2014 (2014-01-09) | 1,4-11, 14,15 | INV. |
| A | * Claims: 1,5 Paragraphs: 34-36; figures 1-4,21-23 * | 2,3,13 | G06F21/60 G06F12/14 G06F21/78 H04L9/06 |
| A | GONG LINMING ET AL: "Using Transposition Padding to Get CCA2 Security From Any Deterministic Encryption Schemes", IEEE ACCESS, vol. 7, 22 January 2019 (2019-01-22), pages 6765-6773, XP011706466, DOI: 10.1109/ACCESS.2019.2891075 [retrieved on 2019-01-22] * Pages: 1-4 * | 1-15 | |
| A | US 2014/248929 A1 (NOONAN JOSEPH [US] ET AL) 4 September 2014 (2014-09-04) * Paragraphs: 8-9 * | 1-15 | |
| A | US 2022/100870 A1 (MATTHEWS JR DONALD P [US] ET AL) 31 March 2022 (2022-03-31) * Claims: 1-3 Paragraph: 12; figures 1-8 * | 1-15 | **TECHNICAL FIELDS SEARCHED (IPC)** G06F H04L |
| A | CN 116 846 542 A (SHANDONG YUNHAI GUOCHUANG CLOUD COMPUTING EQUIPMENT IND INNOVATION CEN) 3 October 2023 (2023-10-03) * Paragraphs: 7-26 * | 1-15 | |

The present search report has been drawn up for all claims

| Place of search | Date of completion of the search | Examiner |
|---|---|---|
| Munich | 18 August 2025 | Shibli, Kamel |

EPO FORM 1503 03.82 (P04C01)

## ANNEX TO THE EUROPEAN SEARCH REPORT
## ON EUROPEAN PATENT APPLICATION NO.

EP 25 19 3682

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2025

| Patent document cited in search report | | Publication date | Patent family member(s) | | Publication date |
|---|---|---|---|---|---|
| US 2014013124 | A1 | 09-01-2014 | AT | E435538 T1 | 15-07-2009 |
| | | | CA | 2537299 A1 | 18-08-2005 |
| | | | EP | 1658696 A1 | 24-05-2006 |
| | | | EP | 2099154 A2 | 09-09-2009 |
| | | | HK | 1090485 A1 | 22-12-2006 |
| | | | US | 2005232415 A1 | 20-10-2005 |
| | | | US | 2014013124 A1 | 09-01-2014 |
| | | | WO | 2005076515 A1 | 18-08-2005 |
| US 2014248929 | A1 | 04-09-2014 | US | 2014248929 A1 | 04-09-2014 |
| | | | WO | 2012138969 A2 | 11-10-2012 |
| US 2022100870 | A1 | 31-03-2022 | CN | 116324780 A | 23-06-2023 |
| | | | EP | 4217895 A1 | 02-08-2023 |
| | | | JP | 2023542936 A | 12-10-2023 |
| | | | KR | 20230074166 A | 26-05-2023 |
| | | | US | 2022100870 A1 | 31-03-2022 |
| | | | WO | 2022066964 A1 | 31-03-2022 |
| CN 116846542 | A | 03-10-2023 | NONE | | |

EPO FORM P0459

For more details about this annex : see Official Journal of the European Patent Office, No. 12/82